# FASCICULE DE BREVET EUROPEEN

(11) **EP 1 056 891 B1**
(45) Date de publication et mention de la délivrance du brevet: **03.04.2002**
(21) Numéro de dépôt: 98964556.9
(22) Date de dépôt: 30.12.1998
(51) Int. Cl.: C23F 11/02, B65D 81/26

(54) **UTILASATION D'UNE COMPOSITION OU PREMELANGE A BASE D'INHIBITEURS DE CORROSION VOLATILS, COMPOSITION OU PREMELANGE, ARTICLES COMPORTANT CETTE COMPOSITION**
VERWENDUNG EINER ZUSAMMENSETZUNG ODER VORMISCHUNG BASIEREND AUF FLÜCHTIGEN KORROSIONSINHIBITOREN, ZUSAMMENSETZUNG ODER VORMISCHUNG, GEGENSTÄNDE, DIE DIESE ENTHALTEN
USE OF A COMPOSITION OR PREMIX BASED ON VOLATILE CORROSION INHIBITORS, COMPOSITION OR PREMIX, ARTICLES COMPRISING SAID COMPOSITION AND PREPARATION METHOD

(30) Priorité: 17.02.1998 FR 9801902
(43) Date de publication de la demande: 06.12.2000
(73) Titulaire: Henkel KGaA, 40589 Düsseldorf (DE)
(72) Inventeur: SHAPIRA, Joseph, F-75015 Paris (FR); DRONIOU, Patrick, F-92700 Colombes (FR); GUILLOU, Loic, F-78400 Chatou (FR); STOIANOVICI, Gabriela, F-95210 Saint-Gratien (FR); DELALANDE, Patrick, F-77400 Dampmart (FR)
(74) Mandataire: Koch, Gustave
(86) Numéro de dépôt international: FR9802920
(87) Numéro de publication internationale: WO9942640

(56) Documents cités:
- BE-A- 702 592
- US-A- 2 918 389

## Description

L'invention a pour objet l'utilisation d'une composition ou prémélange à base d'inhibiteurs de corrosion volatils pour limiter au maximum la dégradation ou la libération des inhibiteurs de corrosion volatils lors de la préparation de ladite composition.

Elle vise également une composition ou prémélange à base d'inhibiteurs de corrosion volatils.

Elle vise encore les articles à base de polymères et dont l'un des composants est constitué par cette composition ou prémélange, ainsi que le procédé de préparation de ces articles qui comprennent notamment les pellicules d'emballage, les emballages construits à partir de plaques et autres pièces à base de polymères.

Elle vise également les articles sous forme de solides pâteux, à base d'agents structurants, et dont l'un des composants est constitué par la susdite composition ou prémélange.

Elle vise enfin l'utilisation des susdits composition et articles pour la protection des pièces métalliques contre la corrosion.

Il est connu d'utiliser des inhibiteurs de corrosion volatils lorsqu'il s'agit de protéger contre la corrosion des pièces métalliques sensibles à la corrosion, notamment celles qui sont en acier doux à basse teneur en carbone et qui, une fois usinées, sont expédiées telles quelles à leur lieu de destination par container maritime en vue d'une finition sur place, notamment par peinture; les risques de corrosion sont alors considérables, notamment lorsque les pièces en question sont acheminées vers les zones chaudes et humides.

Les inhibiteurs de corrosion volatils offrent, dans ces conditions, une très bonne protection contre la corrosion et présentent l'avantage de permettre d'éviter d'avoir recours aux techniques conventionnelles de protection des pièces métalliques; ces techniques conventionnelles consistent en l'application de peintures, vernis, plastiques, cires, graisses et huiles qu'il convient d'éliminer avant la finition sur place, ce qui entraîne des coûts supplémentaires et des pollutions.

Les inhibiteurs de corrosion volatils, généralement désignés par ICV, mettent en oeuvre des additifs dont la tension de vapeur peut être considérée comme non négligeable à la température d'utilisation, (par exemple, de l'ordre de 10⁻⁵ à 10⁻¹ mm Hg, à 20 °C), et qui sont capables d'inhiber la corrosion des métaux.

Ces ICV agissent grâce au fait qu'ils sont véhiculés sous forme de vapeur jusqu'à la surface métallique à protéger, pour y être adsorbés ou bien dissous dans une éventuelle eau de condensation.

On connaît également des produits qui sont classés par extension dans les ICV en raison du fait qu'un de leurs produits de réaction présente une tension de vapeur adéquate. Ainsi, par exemple, le nitrite de sodium, en présence d'ions d'ammonium, peut former du nitrite d'ammonium qui est relativement volatil. Le nitrite de sodium de départ est alors considéré comme un ICV.

On préconise d'utiliser un mélange de différents produits classés par extension dans les ICV dans un véhicule liquide inerte pour obtenir un effet anti-corrosion optimum quelque soit la composition du matériau à protéger (BE 702592).

Lorsque les pièces métalliques à protéger sont emballées dans des pellicules, les ICV sont incorporés dans la matière constitutive de ces pellicules; étant donné que ces pellicules peuvent se trouver en contact direct avec la surface des pièces à protéger, des inhibiteurs de corrosion agissant par contact sont également incorporés dans la masse constitutive de ces pellicules.

Les avantages de cette technique de protection par emballage dans une pellicule contenant des ICV résident dans une grande facilité de mise en oeuvre et une protection globale étant donné que les vapeurs pénètrent dans les endroits les plus inaccessibles des pièces de formes complexes sans qu'il soit nécessaire d'avoir recours à un nettoyage ou à une préparation préalable, toute opération de déprotection et toute pollution étant par ailleurs éliminées.

Il est parfois nécessaire de ne protéger contre la corrosion que des parties de pièces métalliques de dimensions importantes et de géométrie complexe. Des solides pâteux mis en forme par les techniques habituelles de l'industrie des polymères (moulage, modelage, extrusion) apportent aux pièces métalliques la protection localisée nécessaire, minimisant considérablement les coûts.

Pour incorporer les ICV dans la masse constitutive des pellicules ou autres articles d'emballage qui sont souvent à base de polymères thermoplastiques, il est connu de réaliser des mélanges directs des poudres d'ICV avec les polymères et de former directement par extrusion ou soufflage des pellicules d'emballage ou des pièces massives telles que des plaques.

A la température d'extrusion qui est d'environ 160°C pour le polyéthylène basse densité et de 240°C pour le polypropylène, les ICV ont une volatilité extrêmement importante qui conduit, dans le cas de la fabrication d'une pellicule, à l'apparition d'une forte porosité et à un fort risque de dégradation et/ou de décomposition avec élimination d'au moins une partie des ICV. L'efficacité du point de vue anticorrosion de telles pellicules est donc fortement diminuée par suite de la perte de matières actives.

Pour remédier à cet inconvénient, c'est-à-dire pour limiter la perte en ICV pendant la préparation proprement dite des articles finis, il a été proposé d'avoir recours à des prémélanges contenant les ICV, c'est-à-dire à des concentrés de matière active dispersée dans des supports tels que des polymères, des solvants et des plastifiants; les prémélanges à base de polymères (Brevet BR-A-9001035) présentent l'avantage général d'être homogènes et de manipulation facile; ces prémélanges sont ensuite incorporés dans les polymères en vue de la préparation des articles d'emballage.

Etant donné, toutefois, que les températures utilisées au moment de la préparation des prémélanges sont souvent supérieures à 150°C, on assiste à la dégradation au moins partielle desdits prémélanges; ainsi et à titre d'exemple, on signale que le nitrite de dicyclohexylamine, mélangé et extrudé avec du polyéthylène à 160°C, conduit à des granulés de prémélange qui présentent une coloration jaune foncé, caractéristique d'une forte dégradation, c'est-à-dire d'une perte d'activité.

Pour éviter ces dégradations excessives à la chaleur, on a proposé d'avoir recours à des prémélanges liquides, à base d'huile, qui ne nécessitent pas de passage à des températures élevées lors de leur fabrication (brevet US-A- 4 913 874).

Mais étant donné que les ICV sont peu fréquemment solubles dans ces milieux huileux, il s'ensuit une hétérogénéité des prémélanges obtenus et l'apparition de difficultés dues à des sur-concentrations ou des sous-concentrations locales lors de leur incorporation ultérieure dans les polymères à partir desquels sont constitués les articles finis.

On a également proposé de remédier à cet inconvénient en ayant recours à des prémélanges liquides sous forme de solutions solvantées ou huileuses comportant les ICV, prémélanges qui ne sont pas incorporés lors de l'extrusion, mais appliqués sur ces films par pulvérisation, formant ainsi, après l'évaporation du solvant, soit une couche poudreuse d'ICV (brevet DE 3 417 149 A1), soit une couche huileuse contenant les ICV (brevet GB 2 188 274 A).

L'inconvénient de ces prémélanges réside dans le fait que les ICV ne sont pas emprisonnés dans une matrice imposant une libération lente, la protection obtenue étant donc de courte durée. Par ailleurs, l'adhérence des couches déposées sur les articles est faible et conduit à des pertes lors des manipulations et à l'obligation de nettoyer les pièces devant être protégées, ce que l'on veut précisément éviter.

L'invention a pour but, surtout, de remédier aux inconvénients de l'art antérieur et de fournir des compositions à base d'ICV, répondant mieux que celles qui existent déjà aux divers desiderata de la pratique. Elle a également pour but de fournir des articles finis mettant en oeuvre au moins une composition à base d'ICV conforme à l'invention.

L'invention a pour but, enfin, de proposer de nouvelles utilisations de ces compositions à base d'ICV, telles que la protection partielle et localisée de certaines pièces métalliques de grandes dimensions et de formes complexes.

Et la Société Demanderesse a eu le mérite de trouver, à l'issue de recherches approfondies, que ces buts étaient atteints dès lors que l'on fait comporter à une composition à base d'inhibiteurs de corrosion volatils, des agents structurants propres à permettre la préparation d'un prémélange à des températures suffisamment basses pour limiter au maximum la libération et/ou la dégradation des ICV pendant cette préparation.

En conséquence, l'invention a pour objet l'utilisation d'une composition ou prémélange à base d'inhibiteurs de corrosion volatils qui comporte, pour limiter au maximum la libération et/ou la dégradation des ICV au moment de la formation de la composition ou prémélange, soit une quantité efficace d'un agent structurant, constitué par au moins une substance solide ou pâteuse dont le point de fusion est de 40 à 110°C, de préférence de 50 à 90°C, soit une substance liquide propre à former, en mélange avec une charge minérale, un ensemble pâteux ou solide.

Selon un mode de réalisation avantageux, dans l'utilisation conforme à l'invention, la composition comprend de 1 à 90%, de préférence de 20 à 60% en poids d'au moins un inhibiteur de corrosion volatil et de 10 à 99%, de préférence de 40 à 80% d'au moins un des agents structurants définis ci-dessus.

Selon un autre mode de réalisation avantageux, dans l'utilisation conforme à l'invention, la composition comprend au moins un agent structurant choisi dans le groupe de ceux comprenant les composés aliphatiques et/ou résineux, solides ou pâteux, à bas point de fusion compris entre 40 et 110°C, de préférence entre 50 et 90°C.

Selon un autre mode de réalisation avantageux de l'utilisation conforme à l'invention, l'agent structurant de la composition est choisi dans le groupe comprenant les composés organiques aliphatiques mono- ou polyfonctionnels, linéaires et/ou peu ramifiés avec des chaines hydrocarbonées ayant au moins 10 atomes de carbone, dont notamment:
- les acides mono- ou dicarboxyliques, éventuellement oxydés, saturés ou insaturés, leurs esters et leurs sels,
- les acides phosphoriques, sulfoniques et phosphoniques, leurs esters avec les alcools et leurs sels de métaux alcalins, alcalino-terreux, de zinc, d'aluminium et/ou d'amines organiques,
- les composés cycliques ou acycliques du groupe comprenant les lactones, les cétones, les aldéhydes, les amides et les acétals,
- les alcools supérieurs, primaires ou secondaires, cycliques ou acycliques, éventuellement polyalcoxylés, à chaîne hydrocarbonée ayant au moins 10 atomes de carbone,
- les hydrocarbures aliphatiques linéaires et/ou peu ramifiés, notamment les paraffines et les isoparaffines,
- les polyoléfines et leurs copolymères à faibles masses moléculaires de 3000 à 20000 g/mole.
- les polyglycols, notamment les polyéthylèneglycols de masse moléculaire de 2000 à 10000 g/mole.

Selon un autre mode de réalisation avantageux de l'utilisation conforme à l'invention, l'agent structurant de la composition est choisi dans le groupe comprenant les composés résineux ayant une structure polymérique et/ou cyclique et pouvant contenir, en proportion minoritaire, des dérivés aromatiques et des terpènes cycliques.

Selon un autre mode de réalisation avantageux de l'utilisation conforme à l'invention, l'agent structurant de la composition est choisi dans le groupe de ceux identifiés dans le tableau A ci-après et dont certains sont des cires d'origine naturelle ou synthétique.

**TABLEAU A**

| Origine de l'agent structurant | Nature chimique majoritaire de l'agent structurant | Nom de l'agent structurant | Point de fusion (°C) | Densité à 25°C ASTM D 1298 | Indice de pénétration à 25°C ASTM D 1321 |
|---|---|---|---|---|---|
| Naturelle | Ester (cirotate de myricyle) | Camauba | 83-86 | 0,995 | --- |
| | Ester (palmitate de myricyle) | Cire d'abeilles | 62-65 | 0,955 | --- |
| Minérale | Hydrocarbures paraffiniques (mélange) | Paraffine | 50-60 | 0,900 | 15 |
| | Hydrocarbures isoparaffiniques et naphténiques | Cire micro-cristalline | 69 | 0,930 | 29 |
| | Hydrocarbures aliphatiques (mélange) | Pétrolatum | 70-72 | 0,910/20°C | 43-45 |
| Synthétique | Polyéthylène | Cire de polyéthylène | 88 | 0,930 | 6,5 |
| | Hydrocarbures isoparaffiniques oxydés | Cire micro-cristalline oxydée | 85 | --- | 13 |
| | Ester phosphorique d'alcools gras C₁₆/C₁₈ | --- | 83-89 | 0,998 | --- |
| | Polyéthylèneglycol | Polyéthylèneglycol 4000 | 57-59 | 1,112/99°C | --- |

L'invention a également pour objet une composition ou prémélange à base d'inhibiteurs de corrosion volatils, caractérisée par le fait qu'elle comporte une quantité efficace d'au moins un agent structurant, constitué par une substance solide dont le point de fusion est de 40 à 110°C, de préférence de 50 à 90°C, ce grâce à quoi la libération et/ou la dégradation des ICV au moment de la formation de la composition ou prémélange est limitée au maximum.

Selon un mode de réalisation avantageux, la composition conforme à l'invention comprend de 1 à 90%, de préférence de 20 à 60% en poids d'au moins un inhibiteur de corrosion volatil et de 10 à 99%, de préférence de 40 à 80% d'au moins un agent structurant constitué par une substance solide dont le point de fusion est de 40 à 110°C, de préférence de 50 à 90°C.

Selon un autre mode de réalisation avantageux, la composition conforme à l'invention comprend au moins un agent structurant choisi dans le groupe de ceux comprenant les composés aliphatiques et/ou résineux, solides, à bas point de fusion compris entre 40 et 110°C, de préférence entre 50 et 90°C.

Selon un autre mode de réalisation avantageux de la composition conforme à l'invention, l'agent structurant solide est choisi dans le groupe comprenant les composés organiques aliphatiques mono- ou polyfonctionnels, linéaires et/ou peu ramifiés avec des chaines hydrocarbonées ayant au moins 10 atomes de carbone, dont notamment:
- les acides mono- ou dicarboxyliques, éventuellement oxydés, saturés ou insaturés, leurs esters et leurs sels,
- les acides phosphoriques, sulfoniques et phosphoniques, leurs esters avec les alcools et leurs sels de métaux alcalins, alcalino-terreux, de zinc, d'aluminium et/ou d'amines organiques,
- les composés cycliques ou acycliques du groupe comprenant les lactones, les cétones, les aldéhydes, les amides et les acétals,
- les alcools supérieurs, primaires ou secondaires, cycliques ou acycliques, éventuellement polyalcoxylés, à chaîne hydrocarbonée ayant au moins 10 atomes de carbone,
- les hydrocarbures aliphatiques linéaires et/ou peu ramifiés, notamment les paraffines et les isoparaffines,
- les polyoléfines et leurs copolymères à faibles masses moléculaires de 3000 à 20000 g/mole.
- les polyglycols, notamment les polyéthylèneglycols de masse moléculaire de 2000 à 10000 g/mole.

Selon un autre mode de réalisation avantageux de la composition conforme à l'invention, l'agent structurant solide est choisi dans le groupe comprenant les composés résineux ayant une structure polymérique, et/ou cyclique et pouvant contenir, en proportion minoritaire, des dérivés aromatiques et des terpènes cycliques.

Selon un autre mode de réalisation avantageux, la composition conforme à l'invention et la composition utilisée conformément à l'invention comprennent au moins un inhibiteur de corrosion volatil choisi dans le groupe comprenant:
- les dérivés azotés et notamment, d'une part, les amines aliphatiques, aromatiques, acycliques ou cycliques dont la dicyclohexylamine, la cyclohexylamine, la morpholine, la diisopropylamine et la benzylamine, leurs sels organiques dont les benzoates, carbamates, laurates, caprylates, succinates ou minéraux dont les nitrites, nitrates, carbonates, phosphates, phosphites et, d'autre part, les hétérocycles dont l'imidazole et ses dérivés, les triazoles et leurs dérivés, ainsi que l'hexaméthylènetétramine,
- les dérivés oxydo azotés dont les sels des métaux alcalins ou alcalino-terreux de l'acide nitreux et
- les dérivés benzoïques de ces métaux tels que le benzoate de sodium.

Il est possible de faire comporter à la composition utilisée conformément à l'invention ou à la composition et/ou aux articles finis conformes à l'invention un ou plusieurs adjuvants choisis dans le groupe comprenant:
- les agents antioxydants et/ou inhibiteurs de dégradation dont le bis-phénol A, le butyl-hydroxy-toluène, le di-tert-butyl-phosphite, le trinonyl-phénoxy-phosphite, le dilauryl-thio-dipropionate,
- les agents anti-UV absorbeurs dont les benzotriazoles, triazines, hydroxybenzophénones et inhibiteurs radicalaires dont les AES ou Amines à Empêchement Stérique et HALS ou "Hindered Amine Light Stabilizer" en langue anglaise,
- les agents antistatiques externes dont les éthers phosphoriques d'alcools éthoxylés et les chlorures d'amines éthoxylées, ou internes dont les amines grasses éthoxylées, les polyols éthoxylés et les alkylsulfonates,
- les agents lubrifiants externes ou internes dont les paraffines, les alcools gras, les acides gras, les esters d'acides et d'alcools gras et les amides,
- les agents plastifiants dont le dioctylphtalate, le tricrésylphosphate et les diesters d'acides aliphatiques,
- les pigments minéraux dont PbSO₄, PbCrO₄, CdS. ZnS, les pigments organiques dont les dérivés azoïques, phtalocyanines ou antraquinoniques et
- les agents ignifugeants dont les composés bromés et chlorés du phosphore, les hydrures des composés d'Al, Mg et Zn, ainsi que les oligomères époxy,
- les charges minérales dont les craies et les carbonates, les talcs, les argiles, les silices.

Ces adjuvants peuvent aussi être ajoutés seulement au moment de l'incorporation de la composition dans le polymère à partir duquel sont fabriquées des articles conformes à l'invention ou dans l'agent structurant.

Ces articles sont caractérisés par le fait qu'au moins l'un de leurs composants est constitué par une composition conforme à l'invention ou qu'ils utilisent une composition conformément à l'invention, et qu'ils sont préparés, selon une première possibilité, à partir d'au moins un polymère qui entre pour au moins 50% en poids dans leur constitution.

Les susdits polymères qui entrent pour au moins 50% en masse dans la constitution des emballages et/ou des articles peuvent être choisis parmi ceux du groupe comprenant:
- les polyoléfines dont les polyéthylènes, le polypropylène, le polybutène et leurs copolymères avec un ou plusieurs monomères insaturés dont l'acétate de vinyle, l'acide acrylique et ses esters avec des alcools à courte chaîne carbonée,
- le polychlorure de vinyle et ses copolymères, les copolymères acryliques et leurs dérivés, et - les polyamides, les polystyrènes, les polycarbo-nates, les polyesters, les polyuréthanes, les caoutchoucs dont le caoutchouc naturel, le styrène-butadiène et le polychloroprène.

Ces articles finis dans la constitution desquels entre la composition conforme à l'invention ou qui utilisent une composition conformément à l'invention, comprennent, non seulement les pellicules souples ou rigides, éventuellement rétractables, mais également d'autres éléments dont notamment des fils, des tubes éventuellement mis en forme et des plaques, éventuellement alvéolaires, à partir desquels il est possible de constituer un conditionnement comprenant une cavité plus ou moins étanche remplie d'une atmosphère confinée contenant des ICV en provenance de la composition ou prémélange; c'est dans cette cavité que sont disposées les pièces métalliques à protéger contre la corrosion.

Les emballages peuvent être constitués par des pellicules simples, mais également par des assemblages de plusieurs des susdits éléments, ces assemblages étant effectués par mise en oeuvre de tout procédé approprié dont l'agrafage, le sertissage, le thermoformage, le pelliplaquage ou la fabrication des blisters.

Les plaques précédemment mentionnées peuvent être obtenues à partir de deux pellicules conformes à l'invention, en laissant un espace entre ces pellicules, cet espace pouvant se présenter sous forme d'alvéoles, ou d'un lacis ondulé obtenu à partir d'une troisième pellicule, l'ensemble ayant l'apparence d'un carton ondulé.

Les emballages constitués à partir desdites plaques, peuvent présenter des canaux de communication de l'intérieur de la cavité délimitée par l'emballage avec l'extérieur, ces canaux ayant un diamètre inférieur à un millimètre en général, autorisant ainsi le passage d'un flux limité d'air seulement.

Les canaux de communication en question sont établis au moment de la fabrication des emballages comportant la composition conforme à l'invention ou après.

Selon une deuxième possibilité et plus précisément dans le cas où il s'agit d'assurer la protection contre la corrosion d'une partie seulement d'une pièce métallique, l'article visé par l'invention est essentiellement à base de la composition conforme à l'invention ou de la composition utilisée conformément à l'invention, y compris les pâtes à modeler ou à mouler et les mastics, l'article ainsi constitué, de par son caractère plastique, présentant l'avantage d'une manipulation aisée et permettant de réaliser au dernier moment la forme la mieux adaptée à la géométrie de la partie à protéger.

On rappelle que les mastics comprennent des polymères et que les pâtes à modeler qui sont exemptes de polymères, contiennent des charges insolubles telles que les charges minérales susmentionnées.

Le procédé de préparation de ces articles comporte, en général, successivement une étape de préparation d'une composition ou prémélange conforme à l'invention et une étape subséquente au cours de laquelle le prémélange est incorporé à un des susdits polymères, les emballages et les articles proprement dits étant obtenus notamment par extrusion ou soufflage, ou par injection à partir du mélange comprenant le prémélange et le polymère.

Alternativement, et dans le cas des mélanges pâteux ne comportant pas de polymères nécessitant un chauffage lors de la fabrication, ce procédé peut être réalisé dans une seule étape, ces articles étant obtenus par des opérations de mélange, spécifiques à la mise en oeuvre des solides pâteux et des mastics, mono- ou bicomposants.

Les articles en question sont utilisés pour la protection des pièces métalliques sensibles à la corrosion, lors de leur transport ou de leur stockage, sans qu'il soit appliqué un traitement de protection complémentaire à ces pièces.

L'invention pourra être encore mieux comprise à l'aide des exemples non limitatifs qui suivent et qui concernent des modes de réalisation avantageux.

### EXEMPLE 1

En vue de la préparation d'un ICV, 70 g de nitrite de sodium, 17,5 g de benzotriazole et 12,5 g de benzoate d'ammonium sont mélangés puis micronisés dans un microniseur à jet d'air pour donner 100 g de mélange poudreux homogène désigné par la et ayant une granulométrie moyenne comprise entre 1 et 15 µm; cette poudre constitue un ICV.

Dans une cuve chauffante munie d'une agitation tournante et raclante, 226 g de la paraffine définie dans le tableau A sont fondus à 65°C, puis 100 g de poudre 1a sont incorporés dans la masse fondue et soigneusement dispersés.

On ajoute ensuite 2 g d'agent anti-UV (commercialisé sous la marque TINUVIN 622 LD par Ciba Geigy), 2 g d'agent antioxydant - inhibiteur de dégradation (commercialisé sous la marque CHIMASSORB 944 LD par Ciba Geigy) et 3 g de colorant jaune Colour Index PY10401/70.

La dispersion est réalisée sous agitation à une vitesse comprise entre 300 à 500 tours/minute, pendant 10 minutes.

Les 333 g du mélange ainsi obtenu qui constitue un prémélange 1b, sont déversés pour refroidissement sur une écailleuse de laboratoire maintenue à 10°C, puis découpés en écailles de dimension comprise entre 0,5 et 10 mm.

300 g de prémélange 1b sont mélangés à froid et d'une manière homogène avec 5,7 kg de polyéthylène basse densité (d=0,920 g/cm³ et indice de fluidité IF=2 g/10 minute), le mélange étant extrudé à 140°C et en une minute dans une extrudeuse-filmeuse monovis, ce qui fournit une pellicule tubulaire désignée par 1c, jaune transparent, de 90±10 µm d'épaisseur; cette pellicule est efficace contre la corrosion des métaux ferreux.

L'efficacité de cette pellicule du point de vue de la protection contre la corrosion a été testée sur des éprouvettes sous forme de plots en acier doux; le test utilisé correspond à la norme nord-américaine FED-STD 101, méthode 4031B.

Cette méthode d'essai consiste à disposer un plot d'acier dans une atmosphère confinée chargée d'ICV libéré à partir de la pellicule, puis à provoquer par refroidissement contrôlé une condensation à la surface du plot afin de provoquer une éventuelle oxydation après un temps déterminé. Le degré d'enrouillement indique l'efficacité anti-corrosion de la pellicule de protection à l'égard du matériau constituant le plot.

A l'issue de ce test, on constate que le plot en acier protégé par la pellicule 1c présente un léger tâchage sur environ 30% de sa surface; il n'y a donc pas eu de corrosion.

Le même test a été réalisé à titre de comparaison en utilisant une pellicule "témoin" désignée par 1d. La pellicule témoin 1d est identique en tous points à la pellicule 1c, hormis le fait qu'elle ne contient pas l'ICV identifié plus haut; les 100 g de mélange 1a sont remplacés, lors de la fabrication du prémélange, par 100 g de charge minérale à base de carbonate de calcium. A l'issue du test, le plot protégé par la pellicule témoin 1d est complètement attaqué: on observe de nombreuses piqûres et de la rouille sur 100% de sa surface de contact avec l'atmosphère confinée.

### EXEMPLE 2

En vue de la préparation d'un ICV, 50 g de benzoate d'ammonium, 25 g d'aminotriazole et 25 g d'hexaméthylènetétramine sont mélangés puis micronisés dans un microniseur à jet d'air pour donner 100 g de mélange poudreux homogène désigné par 2a et ayant une granulométrie moyenne comprise entre 1 et 15 µm.

Dans une cuve chauffante munie d'une agitation tournante et raclante, 235 g de la cire de Carnauba identifiée dans le tableau A sont fondus à 90°C, et 100 g de poudre 2a sont incorporés dans la masse fondue et soigneusement dispersés.

La dispersion est réalisée sous agitation à une vitesse comprise entre 300 à 600 tours/minute, pendant 5 minutes.

Les 335 g de prémélange 2b ainsi obtenu sont déversés pour refroidissement sur une écailleuse de laboratoire maintenue à 15°C, puis découpés en écailles de dimension comprise entre 0,5 et 10 mm.

300 g de prémélange 2b sont mélangés à froid et d'une manière homogène avec 5,1 kg de polyéthylène basse densité (d=0.920 g/cm³ et indice de fluidité IF=2 g/10 minutes) et 0,6 kg de copolymère éthylène/acétate de vinyle (commercialisé sous la marque ESCORÈNE ULTRA par Exxon), 0,1 g d'agent anti-UV (commercialisé sous la marque TINUVIN 622 LD par Ciba Geigy), 0,1 g d'agent antioxydant - inhibiteur de dégradation (commercialisé sous la marque CHIMASSORB 944 LD par Ciba Geigy), et 3 g de colorant jaune de marque Colour Index PY10401.

L'ensemble est extrudé à 120°C et en une minute dans une extrudeuse-filmeuse monovis, ce qui fournit une pellicule tubulaire désignée par 2c, jaune transparent, de 90±10 µm d'épaisseur.

L'efficacité de cette pellicule contre la corrosion des métaux ferreux a été démontrée par mise en oeuvre du test décrit dans l'exemple 1.

A l'issue de ce test, le plot d'acier protégé par la pellicule conforme à l'invention présente seulement un tâchage léger mais acceptable sur environ 10% de sa surface, alors que celui protégé par la pellicule témoin présente de nombreuses piqûres et de la rouille sur 100% de sa surface.

### EXEMPLE 3

En vue de la préparation d'un ICV, 75 g de benzotriazole, 15 g de tolyltriazole et 10 g de benzoate d'ammonium sont mélangés puis micronisés dans un microniseur à jet d'air pour donner 100 g de mélange poudreux homogène désigné par 3a et ayant une granulométrie moyenne comprise entre 1 et 15 µm.

Dans une cuve chauffante munie d'une agitation tournante et raclante, 230 g de la cire microcristalline identifiée dans le tableau A sont fondus à 75°C, puis 100 g de poudre 3a sont alors incorporés à la masse fondue et soigneusement dispersés.

On ajoute 3 g de colorant vert Colour Index PG 7 (pigment azoïque).

La dispersion est réalisée sous agitation à une vitesse comprise entre 300 à 500 tours/minute, pendant 10 minutes.

Les 333 g de prémélange 3b ainsi obtenu sont déversés pour refroidissement sur une écailleuse de laboratoire maintenue à 10°C, puis découpés en écailles de dimension comprise entre 0,5 et 10 mm.

300 g de prémélange 3b sont mélangés à froid et d'une manière homogène avec 5,7 kg de polyéthylène basse densité (d=0,920 g/cm³ et indice de fluidité IF=2 g/10 minutes), l'ensemble étant extrudé à 140°C et en une minute dans une extrudeuse-filmeuse monovis, ce qui fournit une pellicule tubulaire désignée par 3c, vert transparent, de 90±10 µm d'épaisseur.

Cette pellicule est efficace contre la corrosion des alliages à base de cuivre.

Son efficacité a été testée par essai à la thioacétamide sur des éprouvettes en cuivre de pureté électrolytique, selon la norme suisse SN 289 650.

Pour ce faire, on dispose un plot de cuivre dans une cavité remplie d'une atmosphère confinée, ayant une humidité relative d'environ 75% : cette atmosphère confinée est chargée d'ICV libéré par un morceau de pellicule 3c, également disposé dans cette cavité, en présence de thioacétamide libérant des dérivés soufrés; à l'issue du test, on procède à une évaluation visuelle de la corrosion de 1a surface du plot; le degré de dégradation indique l'efficacité anti-corrosion de la pellicule de protection à l'égard du cuivre constituant le plot.

Le plot en cuivre protégé par un coupon de 160 cm² de pellicule 3c présente, après 48 heures de test, un léger changement de couleur sur environ 10% de la surface; il s'agit d'une teinte dorée sur le pourtour du plot, ce qui montre qu'il n'y a pas corrosion.

Le même test a été réalisé, à titre de comparaison, en utilisant une pellicule "témoin" 3d: il s'agit d'une pellicule identique à 3c, hormis le fait qu'elle ne contient pas d'ICV; les 100 g de mélange 3a ont été remplacés, lors de la fabrication du prémélange, par 100 g de charge minérale à base de carbonate de calcium.

A l'issue du test, le plot protégé par la pellicule témoin 3d présente un changement très important de couleur sur 100% de sa surface de contact avec l'atmosphère confinée; il s'agit d'une teinte dorée à rougeâtre intense qui traduit une corrosion importante.

### EXEMPLE 4

En vue de la préparation d'un ICV, 50 g de benzoate d'ammonium, 25 g de benzotriazole et 25 g d'o-nitrobenzoate de dicyclohexylamine sont mélangés puis micronisés dans un microniseur à jet d'air pour donner 100 g de mélange poudreux homogène désigné par 4a et ayant une granulométrie moyenne comprise entre 1 et 15 µm.

Dans une cuve chauffante munie d'une agitation tournante et raclante, 226 g de la cire d'abeille identifiée dans le tableau A sont fondus à 70°C, puis 100 g de poudre 4a sont incorporés dans la masse fondue et soigneusement dispersés.

On ajoute 2 g d'agent anti-UV (commercialisé sous la marque TINUVIN 622 LD par Ciba Geigy) et 2 g d'agent antioxydant - inhibiteur de dégradation (commercialisé sous la marque CHIMASSORB 944 LD par Ciba Geigy).

La dispersion est réalisée sous agitation à une vitesse comprise entre 300 à 500 tours/minute, pendant 10 minutes.

Les 330 g de prémélange 4b ainsi obtenu sont déversés pour refroidissement sur une écailleuse de laboratoire maintenue à 10°C, puis découpés en écailles de dimension comprise entre 0,5 et 10 mm.

300 g de prémélange 4b sous forme d'écailles sont mélangés à froid et d'une manière homogène avec 5,7 kg de polyéthylène basse densité (d=0,925 g/cm³ et indice de fluidité IF=20 g/10 minutes), le mélange ainsi obtenu étant injecté à 160°C dans le moule refroidi à 40°C d'une machine de type Battenfeld Plus 250 commercialisée par la société Battenfeld; on obtient ainsi des plaquettes désignées par 4c, incolores, translucides, de dimensions 50 x 60 x 2 mm, utilisées pour la protection anticorrosion de l'argent.

Ces plaquettes sont emballées dans un film de polyéthylène neutre, conjointement avec la pièce en argent, par exemple un bijou à protéger. Grâce à l'ICV qui se dégage des plaquettes 4c, le noircissement de l'argent, caractéristique du vieillissement de ce matériau, est évité.

### EXEMPLE 5

En vue de la préparation d'un ICV, 45 g de benzotriazole, 45 g de benzoate d'ammonium et 10 g de sorbate de potassium sont mélangés puis micronisés dans un microniseur à jet d'air pour donner 100 g de mélange poudreux homogène désigné par 5a et ayant une granulométrie moyenne comprise entre 1 et 15 µm.

Dans une cuve chauffante munie d'une agitation tournante et raclante, 226 g de l'ester phosphorique d'alcools gras C₁₆/C₁₈ identifié dans le tableau A sont fondus à 90°C, puis 100 g de poudre 5a sont incorporés dans la masse fondue et soigneusement dispersés.

On ajoute 2 g d'agent anti-UV (commercialisé sous la marque TINUVIN 622 LD par Ciba Geigy), 2 g d'agent antioxydant - inhibiteur de dégradation (commercialisé sous la marque CHIMASSORB 944 LD par Ciba Geigy) et 3 g de pigment bleu Colour Index PB 15 (pigment phtalocyanine).

La dispersion est réalisée sous agitation à une vitesse comprise entre 300 à 600 tours/minute, pendant 5 minutes.

Les 333 g de prémélange 5b ainsi obtenu sont déversés pour refroidissement sur une écailleuse de laboratoire maintenue à 15°C, puis découpés en écailles de dimension comprise entre 0,5 et 10 mm.

300 g de prémélange 5b sont mélangés à froid et d'une manière homogène avec 5,7 kg de polyéthylène basse densité (d=0,920 g/cm³ et indice de fluidité IF=2 g/10 minutes) et la masse ainsi obtenue est extrudée à 140°C et en une minute dans une extrudeuse-filmeuse monovis, ce qui fournit une pellicule tubulaire d'emballage désignée par 5c, bleu transparent, de 90±10 µm d'épaisseur.

Grâce à sa teneur en ICV, cette pellicule 5c est efficace contre la corrosion de pièces en aluminium emballées dans cette pellicule.

Les propriétés anticorrosion de la pellicule 5c ont été testées sur des plots en alliage d'aluminium de nuance 5052 dans la nomenclature ISO, en utilisant un test répondant à la norme suisse SN 289 650 qui comprend un essai aux agents chlorés.

Ce test consiste à disposer un plot en alliage d'aluminium jouant le rôle de pièce d'essai dans une atmosphère humide confinée, chargée d'une quantité connue d'eau de Javel susceptible de libérer du chlore gazeux corrosif en présence de la pellicule d'emballage 5c à partir de laquelle sont libérées les vapeurs de l'ICV y contenu; le degré de dégradation de la pièce après un maintien dans cette atmosphère pendant 24 heures et à une température de 40°C caractérise l'efficacité de la pellicule 5c contre la corrosion par le chlore du matériau constituant le plot.

A l'issue du test, c'est-à-dire après 24 heures, la surface du plot en aluminium protégée par un coupon de 160 cm² de pellicule 5c ne présente aucun changement de couleur, ni aucun ternissement.

Le même test a été réalisé, à titre de comparaison, en utilisant une pellicule "témoin" 5d: il s'agit d'une pellicule identique en tous points à la pellicule 5c, hormis le fait qu'elle ne contient pas d'ICV: les 100 g de mélange 5a ont en effet été remplacés, lors de la fabrication du prémélange de substitution au prémélange 5b, par 100 g de charge minérale totalement inefficace dans l'usage recherché, à base de carbonate de calcium.

A l'issue du même temps de test, le plot protégé par la pellicule témoin 5d présente des piqûres blanches et un ternissement sur l'ensemble de la surface de contact avec l'atmosphère confinée.

### EXEMPLE 6

En vue de la préparation d'un ICV, 300 g de prémélange 1b selon l'exemple 1 sont mélangés à froid et d'une manière homogène avec 5,7 kg de polyéthylène basse densité (d=0.920 g/cm³ et indice de fluidité IF=2 g/10 minutes) et l'ensemble est extrudé à 140°C et en une minute dans une extrudeuse-filmeuse monovis, ce qui fournit une pellicule tubulaire transparente, de couleur jaune, de 150±10 µm d'épaisseur.

Cette pellicule est étirée avec un taux d'étirage de 2,5 selon les deux directions orthogonales du plan, avant d'être refroidie en vue d'une utilisation ultérieure comme pellicule d'emballage pour la protection contre la corrosion des métaux ferreux. Elle est désignée par 6c.

300 g de prémélange 1b sont mélangés à froid et d'une manière homogène avec 5,7 kg de copolymère éthylène/propylène à 5% d'éthylène (d=0,895 g/cm³ et indice de fluidité IF=4 g/10 minutes - valeur à 230°C) et l'ensemble est extrudé à travers trois filières plates disposées comme décrit dans le Brevet français FR 2 142 752 dans une extrudeuse monovis à 180°C en une minute, ce qui permet d'obtenir une plaque alvéolaire jaune ayant la constitution du carton ondulé, de 3,5 mm d'épaisseur totale, et dont la masse surfacique est de 800 g/m2; cette plaque est efficace contre la corrosion des métaux ferreux.

On lui fait subir un traitement de surface classique de type corona (traitement par plasma gazeux) sur les deux faces, afin de faciliter un collage ultérieur. Elle est enduite d'une colle solide à température ambiante, à base d'un copolymère éthylène/ester acrylique (teneur en ester acrylique de 15%, indice de fluidité IF=4 g/10 minutes).

Cette plaque est désignée par 6d.

A partir de la pellicule 6c et de la plaque 6d, on fabrique, par la technique de thermoformage et de la façon indiquée ci-après, un emballage ou conditionnement pour des pièces métalliques sensibles à la corrosion.

On fait comporter à la plaque 6d un ensemble de trous en ayant recours à un dispositif de perçage multi-trous.

Les trous ainsi obtenus, de forme conique, ont un diamètre de moins de 1 mm et sont espacés les uns des autres d'environ 1 cm.

Une pièce métallique est positionnée sur la plaque 6d, placée dans une machine de pelliplaquage de marque MECASKIN 53M commercialisée par la société SDMF.

Le film 6c, immobilisé dans un cadre serre-flan situé au-dessus de la plaque 6d, est chauffé pendant 12 secondes à 90-95°C à l'aide de panneaux radiants. Une fois détendu, puis retendu, il est plaqué et moulé sur la pièce à protéger, déposée sur la plaque 6d, à l'aide d'un vide partiel de 680 à 720 mm Hg, assuré pendant environ 5 secondes.

Le vide pénètre entre les deux matériaux 6c et 6d à travers les trous réalisés dans la plaque 6d. Durant cette opération, le film 6c et la plaque 6d sont collés sur une surface de contact.

La cavité ainsi formée dans laquelle est logée la pièces métallique contient des vapeurs d'ICV libérées à partir de la pellicule et de la plaque, même si cette cavité communique avec l'atmosphère extérieure par l'intermédiaire des trous comportés dans la plaque ; la fuite des inhibiteurs depuis l'intérieur de la cavité est limitée dans une proportion considérable, grâce à l'effet de sas joué par la structure alvéolaire de la plaque. L'ensemble de conditionnement est efficace lors d'un stockage prolongé de deux ans de la pièce métallique.

### EXEMPLE 7

En vue de la préparation d'un ICV, 150 g de paraffine et 150 g de cire pétrolatum, définies dans le tableau A, sont fondus et mélangés à 70°C dans une cuve chauffante, munie d'une agitation tournante et raclante.

150 g d'huile naphténique (commecialisée sous la marque NYTEX 810 par Nynas, de densité 0,901 à 15°C et indice de réfraction 1,493), sont ensuite ajoutés et incorporés dans le mélange de cires fondues, pour obtenir un liquide visqueux limpide et homogène, de couleur marron foncé.

Dans cette masse fondue, on incorpore et on disperse soigneusement, sous une agitation variant progressivement de 500 à 1500 tours/minute, pendant 45 minutes, 300 g de craie commercialisée sous la marque OMYA BL par Omya SA, de densité 2,7 et granulométrie moyenne de 10 µm), 100 g de kaolin (commercialisé sous la marque SPESWHITE par ECC International, de densité 2,6, granulométrie moyenne de 2 µm et prise d'huile de 48 ml/100 g) et 100 g de talc micronisé (commercialisé sous la marque "TALC 10M2" par Luzenac Talcs, de densité 2,78, granulométrie moyenne de 10 µm et prise d'huile de 48 ml/100 g). La température est maintenue à 65°C.

On obtient 950 g d'une pâte lisse, fluide, de couleur beige, qui constitue le mélange [7a].

On incorpore et on disperse ensuite dans cette pâte, maintenue à 65°C, 50 g de prémélange [1b], décrit dans l'exemple 1, sous agitation modérée, comprise entre 300 et 1000 tours/minute, pendant 10 minutes.

Les 1000 g de mélange pâteux ainsi obtenu sont mis à refroidir pendant 15 minutes sous agitation faible, d'environ 300 tours/minute, à température ambiante.

Ce mélange pâteux, de couleur beige-jaune, qui constitue un ICV modelable, est désigné par [7c]; il est efficace contre la corrosion des métaux ferreux.

L'efficacité anticorrosion volatile de cette pâte ICV à modeler [7c] a été testée sur des éprouvettes en acier doux, sous forme de plots; le test utilisé correspond à la norme nord-américaine FED-STD 101, méthode 4031B, décrit dans l'exemple 1.

A l'issue de ce test, on constate que le plot en acier protégé par les vapeurs inhibitrices de corrosion qui se sont dégagées de 2 g de pâte ICV [7c] ne présente pas d'oxydation sur sa surface.

Le même test a été réalisé, à titre de comparaison, en utilisant une pâte à modeler "témoin", désignée par [7d], qui est identique en tout point à la pâte [7c], hormis le fait qu'elle ne contient pas l'ICV identifié plus haut [1b] ; les 50 g de prémélange [1b] ont été remplacés dans la composition [7d] par 50 g de craie.

A l'issue du test, le plot protégé par la pâte à modeler témoin [7d] est complètement attaqué : on observe de nombreuses piqûres et de la rouille sur 100% de sa surface.

### EXEMPLE 8

En vue de la préparation d'un ICV, 300 g de cire pétrolatum, identifiée dans le tableau A, sont fondus à 70°C dans une cuve chauffante, munie d'une agitation tournante et raclante.

On incorpore et on disperse progressivement, sous une agitation variant de 500 à 2000 tours/minute et pendant 45 minutes, 350 g de craie identifiée dans l'exemple 7, et 300 g de kaolin identifié dans l'exemple 7.

On obtient 950 g d'une pâte lisse, fluide, de couleur beige, qui constitue le mélange [8a].

Dans cette pâte, on incorpore et on disperse soigneusement, sous une agitation modérée comprise entre 500 et 1000 tours/minute et pendant 10 minutes, 50 g de prémélange [2b], décrit dans l'exemple 2.

Les 1000 g de mélange pâteux ainsi obtenu sont mis à refroidir pendant 15 minutes sous agitation faible, d'environ 300 tours/minute, à température ambiante.

Cette pâte, de couleur beige, qui constitue un ICV modelable, est désigné par [8c]; elle est efficace contre la corrosion des métaux ferreux.

L'efficacité anticorrosion volatile de cette pâte ICV à modeler [8c] a été testée sur des éprouvettes en acier doux, sous forme de plots; le test utilisé correspond à la norme nord-américaine FED-STD 101, méthode 4031B, décrit dans l'exemple 1.

A l'issue de ce test, on constate que le plot en acier protégé par les vapeurs inhibitrices de corrosion qui se sont dégagées de 2 g de pâte ICV [8c] ne présente pas d'oxydation sur sa surface.

Le même test a été réalisé, à titre de comparaison, en utilisant une pâte à modeler "témoin", désignée par [8d], qui est identique en tout point à la pâte [8c], hormis le fait qu'elle ne contient pas l'ICV identifié plus haut [2b]; les 50 g de prémélange [2b] ont été remplacés dans la composition [8d] par 50 g de craie.

A l'issue du test, le plot protégé par la pâte à modeler témoin [8d] est complètement attaqué : on observe de nombreuses piqûres et de la rouille sur 100% de sa surface.

### EXEMPLE 9

150 g d'huile de ricin (commercialisée par Mosselman et contenant 90% d'acide ricinoléique, d'indice de réfraction 1,48 et indice d'iode 90 g I₂/100g) sont chargés, à température ambiante, dans un malaxeur horizontal type bras en Z, équipé d'une double enveloppe permettant le chauffage et le refroidissement du mélange.

On incorpore et on disperse, pendant 2 heures, 650 g de craie identifiée dans l'exemple 7, et 150 g de kaolin identifié dans l'exemple 7.

On obtient 950 g d'une pâte lisse, de couleur écrue, non-collante, qui constitue le mélange [9a].

On amène le mélange [9a] à une température de 65-70°C et on y incorpore et disperse soigneusement, pendant 10 minutes, 50 g de prémélange [3b], décrit dans l'exemple 3.

Les 1000 g de mélange pâteux ainsi obtenu sont refroidis progressivement.

Cette pâte, de couleur verte, qui constitue un ICV modelable, est désigné par [9c]; elle est efficace contre la corrosion des alliages à base de cuivre.

Son efficacité anticorrosion volatile a été testée par essai à la thioacétamide, sur des éprouvettes en cuivre de pureté électrolytique, selon la norme suisse SN 289 650. Le test réalisé est identique à celui décrit dans l'exemple 3, hormis le fait que la pellicule [3c] a été remplacée par une quantité définie de pâte [9c].

A l'issue de ce test, on constate que le plot en cuivre protégé par 2 g de pâte [9c] présente, après 48 heures de test, un léger changement de couleur sur environ 10% de la surface; il s'agit d'une faible teinte dorée sur le pourtour du plot, ce qui montre qu'il n'y a pas de corrosion.

Le même test a été réalisé, à titre de comparaison, en utilisant une pâte "témoin", désignée par [9d], qui est identique en tout point à la pâte [9c], hormis le fait qu'elle ne contient pas l'ICV identifié plus haut [3b]; les 50 g de prémélange [3b] ont été remplacés dans la composition [9d] par 50 g de craie.

A l'issue du test, le plot protégé par la pâte à modeler témoin [9d] présente un changement très important de couleur -teinte rougeâtre intense- et un ternissement sur 100% de sa surface exposée à l'atmosphère confinée.

### EXEMPLE 10

En vue de la préparation d'un ICV, 400 g de partie A d'un mastic bicomposant à base d'une résine hydroxylée (commercialisée sous la marque LIDEC A 223 D Partie A par CFPI, de couleur jaune, de masse volumique d'environ 1,47 g/cm³) sont chargés dans un malaxeur horizontal type bras en Z; on y incorpore et disperse soigneusement, pendant 2 heures, 10 g de mélange poudreux [1a] défini dans l'exemple 1.

On obtient 410 g d'une pâte lisse, homogène, de couleur jaune, qui constitue le mélange [10b].

400 g de cette pâte [10b] sont ensuite intimement mélangés, en vue de réticulation, avec 40 g de partie B (durcisseur) du même mastic bicomposant (partie commercialisée sous la marque LIDEC A 223 D Partie B par CFPI, de couleur bleue, à base d'isocyanate, de viscosité d'environ 2000 mPa.s) pour obtenir 400 g de mélange visqueux, de couleur verte et qui, au bout de quelques heures à 23°C et 50% d'humidité relative, devient un élastomère de dureté Shore 55-60.

Cet élastomère, qui constitue un ICV réticulable, est désigné par [10c] et est efficace contre la corrosion des métaux ferreux.

L'efficacité anticorrosion volatile de cet élastomère ICV [10c] a été testée sur des éprouvettes en acier doux, sous forme de plots; le test utilisé met en jeu 2 g d'élastomère et correspond à la norme nord-américaine FED-STD 101, méthode 4031B, décrit dans l'exemple 1.

A l'issue de ce test, on constate que le plot en acier protégé par les vapeurs inhibitrices de corrosion qui se sont dégagées de l'élastomère ICV [10c] ne présente pas d'oxydation sur sa surface.

Le même test a été réalisé, à titre de comparaison, en utilisant un mastic "témoin", désigné par [10d], qui est identique en tout point à l'élastomère [10c], hormis le fait qu'elle ne contient pas l'ICV identifié plus haut [1a]; les 10 g de mélange poudreux [1a] ont été remplacés dans la composition [10d] par 50 g de craie.

A l'issue du test, le plot protégé par le mastic témoin [10d] est complètement attaqué : on observe de nombreuses piqûres et de la rouille sur 100% de sa surface.

## Revendications

1. Article d'emballage se présentant ou bien sous la forme de pellicules souples ou rigides, éventuellement rétractables, ou d'autres éléments dont notamment des fils, des tubes éventuellement mis en forme, et des plaques, éventuellement alvéolaires, à partir desquels il est possible de constituer un conditionnement, ou bien de solides pâteux à caractère plastique, l'un au moins des constituants de cet article d'emballage comportant
- ou bien au moins un polymère qui entre pour au moins 50% en poids dans sa constitution et un prémélange à base d'inhibiteurs de corrosion volatils, ledit polymère étant choisi parmi ceux du groupe comprenant :
- les polyoléfines dont les polyéthylènes, le polypropylène, le polybutène et leurs copolymères avec un ou plusieurs monomères insaturés dont l'acétate de vinyle, l'acide acrylique et ses esters avec des alcools à courte chaîne carbonée,
- le polychlorure de vinyle et ses copolymères, les copolymères acryliques et leurs dérivés, et
- les polyamides, les polystyrènes, les polycarbonates, les polyesters, les polyuréthanes, les caoutchoucs dont le caoutchouc naturel, le styrène-butadiène et le polychloroprène,
- ou bien au moins une charge insoluble, choisie dans le groupe comprenant les charges minérales dont les craies et les carbonates, les talcs, les argiles et les silices et un prémélange à base d'inhibiteurs de corrosion volatils,
ledit prémélange comportant une quantité efficace d'au moins un agent structurant constitué par une substance solide ou pâteuse, choisie dans le groupe comprenant les composés aliphatiques et/ou résineux, solides ou pâteux, à bas point de fusion compris entre 40° et 110°C, de préférence entre 50° et 50°C,
ce grâce à quoi la libération des inhibiteurs de corrosion volatils au moment de la formation du prémélange est limitée au maximum.

2. Article d'emballage selon la revendication 1, **caractérisé par le fait qu'**il est constitué par des pellicules simples ou par des assemblages de plusieurs éléments, ces assemblages étant effectués par mise en oeuvre de tout procédé approprié dont l'agrafage, le sertissage, le thermoformage, le pelliplaquage ou la fabrication des blisters.

3. Article d'emballage selon la revendication 1 ou la revendication 2, **caractérisé par le fait que** le prémélange comprend de 1 à 80%, de préférence de 20 à 60% en poids d'au moins un inhibiteur de corrosion volatil et de 20 à 99%, de préférence de 40 à 80% d'au moins un agent structurant constitué par une substance solide ou pâteuse dont le point de fusion est de 40 à 120°C, de préférence de 50 à 90°C.

4. Article d'emballage selon l'une des revendications 1 à 3, **caractérisé par le fait que** dans le prémélange, l'agent structurant solide ou pâteux est choisi dans le groupe de ceux comprenant les composés aliphatiques, mono- ou polyfonctionnels, linéaires et/ou peu ramifiés avec des chaînes hydrocarbonées ayant au moins 10 atomes de carbone.

5. Article d'emballage selon la revendication 4, **caractérisé par le fait que** l'agent structurant est choisi dans le groupe comprenant:
- les acides mono- ou dicarboxyliques, éventuellement oxydés, saturés ou insaturés, leurs esters et leurs sels,
- les acides phosphoriques, sulfoniques et phosphoniques, leurs esters avec les alcools et leurs sels de métaux alcalins, alcalino-terreux, de zinc, d'aluminium et/ou d'amines organiques,
- les composés cycliques ou acycliques du groupe comprenant les lactones, les cétones, les aldéhydes, les amides et les acétals,
- les alcools supérieurs, primaires ou secondaires, cycliques ou acycliques, éventuellement polyalcoxylés, à chaîne hydrocarbonée ayant au moins 10 atomes de carbone,
- les hydrocarbures aliphatiques linéaires et/ou peu ramifiés, notamment les paraffines et les isoparaffines,
- les polyoléfines et leurs copolymères à faibles masses moléculaires de 3000 à 20000 g/mole,
- les polyglycols, notamment les polyéthylèneglycols de masse moléculaire de 2000 à 10000 g/mole.

6. Article d'emballage selon la revendication 1, **caractérisé par le fait que** l'agent structurant est choisi dans le groupe comprenant les composés résineux ayant une structure polymérique et/ou cyclique et pouvant contenir, en proportion minoritaire, des dérivés aromatiques et des terpènes cycliques.

7. Article d'emballage selon l'une quelconque des revendications 1 à 6, **caractérisé par le fait que** l'agent structurant est choisi dans le groupe de ceux identifiés dans le tableau A ci-après et dont certains sont des cires d'origine naturelle ou synthétique:
**TABLEAU A**
| Origine de l'agent structurant | Nature chimique majoritaire de l'agent structurant | Nom de l'agent structurant | Point de fusion (°C) | Densité à 25°C ASTM D 1298 | Indice de pénétration a 25°C ASTM D 1321 |
|---|---|---|---|---|---|
| Naturelle | Ester (cirotate de myricyle) | Carnauba | 83-86 | 0,995 | --- |
| | Ester (palmitate de myricyle) | Cire d'abeilles | 62-65 | 0,955 | --- |
| Minérale | Hydrocarbures paraffiniques (mélanger | Paraffine | 50-60 | 0,900 | 15 |
| | Hydrocarbures Isoparaffiniques et naphténiques | Cire micro-cristalline | 69 | 0,930 | 29 |
| | Hydrocarbures aliphatiques (mélange) | Pétrolatum | 70-72 | 0,91/20° C | 43-45 43-45 |
| Synthétique | Polyéthylène | Cire de Polyéthylène | 88 | 0,930 | 6,5 |
| | Hydrocarbures Isoparaffiniques oxydés | Cire micro-Cristalline oxydée | 85 | --- | 13 |
| | Ester phosphorique d'alcools gras C₁₆/C₁₈ | --- | 83-89 | 0,998 | --- |
| | Polyéthylèneglycol | Polyéthylèneglycol 4000 | 57-59 | 1,112/99 °C | --- |

8. Article d'emballage selon l'une quelconque des revendications 1 à 7, **caractérisé par le fait que** le prémélange comprend au moins un inhibiteur de corrosion volatil choisi dans le groupe comprenant:
- les dérivés azotés et notamment, d'une part, les amines aliphatiques, aromatiques, acycliques ou cycliques dont la dicyclohexylamine, la cyclohexylamine, la morpholine, la diisopropylamine et la benzylamine, leurs sels organiques dont les benzoates, carbamates, laurates, caprylates, succinates ou minéraux dont les nitrites, nitrates, carbonates, phosphates, phosphites et, d'autre part, les hétérocycles dont l'imidazole et ses dérivés, les triazoles et leurs dérivés, ainsi que l'hexaméthylènetétramine,
- les dérivés oxydo azotés dont les sels des métaux alcalins ou alcalino-terreux de l'acide nitreux, et
- les dérivés benzoïques de ces métaux tels que le benzoate de sodium.

9. Utilisation pour la réalisation d'article d'emballage en manière polymère du prémélange tel que mis en oeuvre dans l'une des revendications 1 à 8.

10. Utilisation des articles d'emballage selon l'une des revendications 1 à 8, pour la protection des pièces métalliques contre la corrosion.

## Claims

1. Packaging article existing either in the form of possibly retractable, flexible or rigid films, or other elements including in particular wires, tubes which are possibly formed, and sheets which are possibly cellular, from which it is possible to constitute a package, or in the form of pasty solids with a plastic character, at least one of the constituents of this packaging article including:
either at least one polymer which enters into its constitution to the extent of at least 50% by weight and a premix based on volatile corrosion inhibitors, the said polymer being chosen from those of the group comprising:
- polyolefins, including polyethylenes, polypropylene, polybutene and their copolymers with one or more unsaturated monomers including vinyl acetate, acrylic acid and its esters with alcohols having a short carbon chain,
- polyvinyl chloride and its copolymers, acrylic copolymers and their derivatives, and
- polyamides, polystyrenes, polycarbonates, polyesters, polyurethanes, rubbers including natural rubber, styrene-butadiene and polychloroprene,
or at least one insoluble filler chosen from the group comprising mineral fillers including chalks and carbonates, talcs, clays and silicas and a premix based on volatile corrosion inhibitors,
the said premix containing an effective quantity of at least one structuring agent consisting of a solid or pasty substance, chosen from the group comprising solid or pasty aliphatic and/or resinous compounds with a low melting point of between 40 and 110°C, preferably between 50 and 90°C, by means of which the release of volatile corrosion inhibitors is limited to a maximum when the composition or premix is formed.

2. Packaging article according to claim 1, **characterized in that** it consists of single films or of assemblies of several elements, these assemblies being produced by employing any suitable method including stapling, crimping, thermoforming, skin-packing or the manufacture of blisters.

3. Packaging article according to claim 1 or claim 2, **characterized in that** the premix comprises from 1 to 80%, preferably 20 to 60% by weight of at least one volatile corrosion inhibitor and 20 to 99%, preferably 40 to 80%, of at least one structuring agent consisting of a solid or pasty substance of which the melting point is 40 to 110°C, preferably 50 to 90°C.

4. Packaging article according to one of claims 1 to 3, **characterized in that** in the premix, the solid or pasty structuring agent is chosen from the group of those comprising linear and/or only slightly branched mono- or polyfunctional aliphatic compounds with hydrocarbon chains having at least 10 carbon atoms.

5. Packaging article according to claim 4, **characterized in that** the structuring agent is chosen from the group comprising:
- saturated or unsaturated, possibly oxidized, mono- or dicarboxylic acids, their esters and their salts,
- phosphoric, sulfonic and phosphonic acids, their esters with alcohols and their salts of alkali metals, alkaline earths, zinc, aluminium and/or organic amines,
- cyclic or acyclic compounds of the group comprising lactones, ketones, aldehydes, amides and acetals,
- cyclic or acyclic, possibly polyalkoxylated, primary or secondary higher alcohols with a hydrocarbon chain having at least 10 carbon atoms,
- linear and/or only slightly branched aliphatic hydrocarbons, in particular paraffins and isoparaffins,
- polyolefins and their copolymers with low molecular masses of 3000 to 20000 g/mole,
- polyglycols, in particular polyethyleneglycols with a molecular mass of 2000 to 10000 g/mole.

6. Packaging article according to claim 1, **characterized in that** the structuring agent is chosen from the group comprising resinous compounds having a polymeric and/or cyclic structure and which may contain, in a minor proportion, aromatic derivatives and cyclic terpenes.

7. Packaging article according to any one of claims 1 to 6, **characterized in that** the structuring agent is chosen from the group of those identified in Table A below and of which some are waxes of natural or synthetic origin:
**TABLE A**
| Origin of structuring agent | Principal chemical nature of structuring agent | Name of structuring agent | Melting point (°C) | Density at 25°C ASTM D 1298 | Penetration index at 25°C ASTM D1321 |
|---|---|---|---|---|---|
| Natural | Ester (myricyl cirotate) | Carnauba wax | 83-86 | 0.995 | -- |
| | Ester (myricyl palmitate) | Bees wax | 62-65 | 0.955 | -- |
| Mineral | Paraffinic hydrocarbons (mixture) | Paraffin wax | 50-60 | 0.900 | 15 |
| | Isoparaffinic and naphthenic hydrocarbons | Microcrystalline wax | 69 | 0.930 | 29 |
| | Aliphatic hydrocarbons (mixture) | Petrolatum | 70-72 | 0.910/ 20°C | 43-45 |
| Synthetic | Polyethylene | Polyethylene wax | 88 | 0.930 | 6.5 |
| | Oxidized isoparaffinic hydrocarbons | Oxidized microcrystalline wax | 85 | -- | 13 |
| | Phosphoric ester of fatty alcohols C₁₆/C₁₈ | - | 83-89 | 0.998 | -- |
| | Polyethyleneglycol | Polyethyleneglycol 4000 | 57-59 | 1.112/ 99°C | -- |

8. Packaging article according to any one of claims 1 to 7, **characterized in that** the premix includes at least one volatile corrosion inhibitor chosen from the group comprising:
- nitrogen-containing derivatives and in particular, on the one hand, aliphatic, aromatic, acyclic or cyclic amines, including dicyclohexylamine, cyclohexylamine, morpholine, diisopropylamine and benzylamine, their organic salts, including benzoates, carbamates, laurates, caprylates, succinates, or their inorganic salts including nitrites, nitrates, carbonates, phosphates, phosphites and, on the other hand, heterocyclic compounds including imidazole and its derivatives, triazoles and their derivatives, as well as hexamethylenetetramine,
- oxido nitrogen-containing derivatives including the alkali metal or alkaline earth salts of nitrous acid and
- the benzoic derivatives of these metals such as sodium benzoate.

9. Use of the premix such as employed in one of claims I to 8 for the production of the packaging article made of polymeric material.

10. Use of packaging articles according to one of claims 1 to 8 for the protection of metal parts against corrosion.

## Patentansprüche

1. Verpackungsartikel in Form von flexiblen oder starren ggf. sich zusammenziehenden Folien oder anderen Elementen, und zwar insbesondere Drähten, ggf. in Form gebrachten Rohren und Platten ggf. mit Zellenstruktur, aus denen eine Verpackung gebildet werden kann, oder von breiförmigen Feststoffen mit plastischem Charakter, wobei mindestens einer der Bestandteile dieses Verpackungsartikels folgendes enthält:
- entweder mindestens ein Polymer, das mindestens zu 50 Gew.-% an seinem Aufbau beteiligt ist, und eine Vormischung auf der Basis von flüchtigen Korrosionsinhibitoren, wobei das Polymer aus der aus den folgenden Stoffen bestehenden Gruppe ausgewählt ist:
- Polyolefine, wie Polyethylene, Polypropylen, Polybuten und ihre Copolymere mit einem oder mehreren ungesättigten Monomeren, wie Vinylacetat, Acrylsäure und ihre Ester mit Alkoholen mit kurzer Kohlenstoffkette,
- Polyvinylchlorid und seine Copolymere, Acrylcopolymere und ihre Derivate und
- Polyamide, Polystyrole, Polycarbonate, Polyester, Polyurethane, Kautschuks, wie Naturkautschuk, Styrolbutadien und Polychloropren,
- oder mindestens einen unlöslichen Füllstoff, der aus der Gruppe ausgewählt ist, die aus mineralischen Füllstoffen, wie Kreiden und Carbonate, Talke, Tone und Kieselerden besteht, und eine Vormischung aus flüchtigen Korrosionsinhibitoren,
wobei die Vormischung eine wirksame Menge von mindestens einem Strukturierungsmittel enthält, das aus einer festen oder breiförmigen Substanz besteht, die aus der Gruppe ausgewählt ist, die feste oder breiförmige aliphatische und/oder Harzverbindungen mit niedrigem Schmelzpunkt zwischen 40° und 110°C, vorzugsweise zwischen 50° und 90°C, umfasst,
wodurch die Freisetzung der flüchtigen Korrosionsinhibitoren zum Zeitpunkt der Bildung der Vormischung maximal begrenzt wird.

2. Verpackungsartikel nach Anspruch 1, **dadurch gekennzeichnet, dass** er aus einfachen Folien oder aus Verbunden von mehreren Elementen besteht, wobei diese Verbunde durch Anwendung jedes geeigneten Verfahrens hergestellt werden, wie Heften, Verfalzen, Warmformung, Beschichtung mit Folien oder Herstellung von Blistern.

3. Verpackungsartikel nach Anspruch 1 oder Anspruch 2, **dadurch gekennzeichnet, dass** die Vormischung 1 bis 80 Gew.-%, vorzugsweise 20 bis 60 Gew.-% mindestens eines flüchtigen Korrosionsinhibitors und 20 bis 99%, vorzugsweise 40 bis 80% mindestens eines Strukturierungsmittels enthält, das aus einer festen oder breiförmigen Substanz besteht, deren Schmelzpunkt bei 40 bis 110°C, vorzugsweise bei 50 bis 90°C liegt.

4. Verpackungsartikel nach einem der Ansprüche 1 bis 3, **dadurch gekennzeichnet, dass** das feste oder breiförmige Strukturierungsmittel in der Vormischung aus der Gruppe ausgewählt ist, die unverzweigte oder wenig verzweigte, mono- oder polyfunktionelle, aliphatische Verbindungen mit Kohlenwasserstoffketten mit mindestens 10 Kohlenstoffatomen umfasst.

5. Verpackungsartikel nach Anspruch 4, **dadurch gekennzeichnet, dass** das Strukturierungsmittel aus der Gruppe ausgewählt ist, die folgendes umfasst:
- ggf. oxidierte, gesättigte oder ungesättigte Mono- oder Dicarboxylsäuren, ihre Ester und ihre Salze,
- Phosphor-, Sulfo- und Phosphonsäuren, ihre Ester mit den Alkoholen und ihre Alkalimetall-, Erdalkalimetall-, Zink-, Aluminium- und/oder organische Aminsalze,
- zyklische oder azyklische Verbindungen der Gruppe, die Lactone, Ketone, Aldehyde, Amide und Acetale umfasst,
- höhere primäre oder sekundäre, zyklische oder azyklische, ggf. polyalcoxylierte Alkohole mit Kohlenwasserstoffkette mit mindestens 10 Kohlenstoffatomen,
- unverzweigte und/oder wenig verzweigte aliphatische Kohlenwasserstoffe, insbesondere Paraffine und Isoparaffine,
- Polyolefine und ihre Copolymere mit niedriger Molekülmasse von 3000 bis 20000 g/mol,
- Polyglykole, insbesondere Polyethylenglykole mit einer Molekülmasse von 2000 bis 10000 g/mol.

6. Verpackungsartikel nach Anspruch 1, **dadurch gekennzeichnet, dass** das Strukturierungsmittel aus der Gruppe ausgewählt ist, die Harzverbindungen mit einer polymerischen und/oder zyklischen Struktur umfasst, die in einem untergeordneten Anteil aromatische Derivate und zyklische Terpene enthalten können.

7. Verpackungsartikel nach einem der Ansprüche 1 bis 6, **dadurch gekennzeichnet, dass** das Strukturierungsmittel aus der Gruppe der in der nachstehenden Tabelle A gekennzeichneten Mittel ausgewählt ist, von denen manche Wachse natürlichen oder synthetischen Ursprungs sind:
**Tabelle A**
| Ursprung des Strukturierungsmittels | vorrangige chemische Natur des Strukturierungsmittels | Namen des Strukturierungsmittels | Schmelzpukt (°C) | Dichte bei 25°C ASTMD 1298 | Eindringindex bei 25°C ASTMD 1321 |
|---|---|---|---|---|---|
| natürlich | Ester (Myricylcirotat | Karnauba | 83-86 | 0,995 | --- |
| | Ester (Myricylpalmitat) | Bienenwachs | 62-65 | 0,955 | --- |
| mineralisch | paraffimische Kohlenwasserstoffe (Mischung) | Paraffin | 50-60 | 0,900 | 15 |
| | isoparaffin. und naphtenische Kohlenwasserstoffe | mikrokristallines Wachs | 69 | 0,930 | 29 |
| | aliphatische Kohlenwasserstoffe (Mischung) | Petrolatum | 70-72 | 0,91/ 20°C | 43-45 |
| synthetisch | Polyethylen | Polyethylenwachs | 88 | 0,930 | 6,5 |
| | isoparaffin. oxidierte Kohlenwasserstoffe | mikrokristallines, oxidiertes Wachs | 85 | --- | 13 |
| | Phosporester von Fett-alkoholen C16/C18 | --- | 83-89 | 0,998 | --- |
| | Polyethylenglykol | Polyethylenglykol 4000 | 57-59 | 1,112/ 99 °C | --- |

8. Verpackungsartikel nach einem der Ansprüche 1 bis 7, **dadurch gekennzeichnet, dass** die Vormischung mindestens einen flüchtigen Korrosionsinhibitor enthält, der aus der Gruppe ausgewählt ist, die folgendes umfasst:
- Stickstoffderivate, insbesondere einerseits azyklische oder zyklische aromatische aliphatische Amine wie Dicyclohexylamin, Cyclohexylamin, Morpholin, Diisopropylamin und Benzylamin, ihre organischen Salze wie Benzoate, Carbamate, Laurate, Caprylate, Succinate oder Mineralsalze wie Nitrite, Nitrate, Carbonate, Phosphate, Phosphite, und andererseits Heterozyklen wie Imidazol und seine Derivate, Triazole und ihre Derivate sowie Hexamethylentetramin,
- Stickstoffoxidderivate wie Alkalimetallsalze oder Erdalkalimetallsalze der salpetrigen Säure, und
- Benzoederivate dieser Metalle wie Natriumbenzoat.

9. Verwendung der Vormischung, wie sie in einem der Ansprüche 1 bis 8 verwendet wird, für die Herstellung von einem Verpackungsartikel aus Polymermaterial.

10. Verwendung der Verpackungsartikel nach einem der Ansprüche 1 bis 8 für den Korrosionsschutz von Metallteilen.
